# EUROPEAN PATENT SPECIFICATION

(11) **EP 2 153 973 B1**
(45) Date of publication and mention of the grant of the patent: **27.02.2013**
(21) Application number: 08751953.4
(22) Date of filing: 23.04.2008
(51) Int. Cl.: B29C 55/02, B32B 27/30, B29K 29/00, B29L 7/00, B29L 9/00

(54) **Method for production of stretched multilayer film**
Verfahren zur Herstellung einer verstreckten Mehrschichtfolie
Procédé de production d'un film multichouche étiré

(30) Priority: 11.05.2007 JP 2007126682
(43) Date of publication of application: 17.02.2010
(73) Proprietor: The Nippon Synthetic Chemical Industry Co., Ltd., Osaka-shi, Osaka 530-0018 (JP)
(72) Inventor: TANIGUCHI, Masahiko, Osaka-shi Osaka 530-0018 (JP); ONISHI, Hideshi, Osaka-shi Osaka 530-0018 (JP); TANABE, Takamichi, Osaka-shi Osaka 530-0018 (JP)
(74) Representative: HOFFMANN EITLE
(86) International application number: PCT/JP2008/057815
(87) International publication number: WO 2008/139863

(56) References cited:
- AU-B2- 2004 323 623
- JP-A- 57 207 025
- JP-A- 2006 123 531
- JP-A- 2006 123 534
- JP-A- 2006 123 534
- JP-A- 2006 312 313

## Description

### TECHNICAL FIELD

The present invention relates to a method for production of a stretched multilayer film comprising a layer containing vinyl alcohol-based resin having a specific chemical structure and a layer containing thermoplastic resin having a melting point of 125 °C or more laminated on each other through an adhesive resin layer, and further relates to a stretched multilayer film produced by this method.

### BACKGROUND ART

Vinyl alcohol-based resins such as polyvinyl alcohol resin (hereinafter, called as "PVA resin") and a saponified product of ethylene-vinylacetate copolymer (hereinafter, sometimes called as "EVOH resin") have excellent transparency, gas barrier property, flavor preservability, solvent resistance, and oil resistance, because they contain many hydroxyl groups in a molecule thereof. On the other hand, the gas barrier property of the vinyl alcohol-based resins may be deteriorated in a high humid condition because of high moisture absorbability.

In view of the above, in utilizing a vinyl alcohol-based resin film for various purposes of use (such as a food packaging material, a medicine packaging material, an industrial chemical packaging material, and an agricultural chemical packaging material etc.), normally, a multilayer structure obtained by laminating a film of the other thermoplastic resin capable of imparting a required property such as moisture resistance on a vinyl alcohol-based resin film is used.

Generally, a multilayer structure including a thermoplastic resin (e.g. polyolefin, polyester, or polyamide etc.) film is used to enhance the moisture resistance. However, since the thermoplastic resin film has a poor adhesiveness to a vinyl alcohol-based resin film, normally, the thermoplastic resin film is laminated on a vinyl alcohol-based resin layer with an adhesive resin.

Generally, it is preferable to use, as an adhesive resin, a resin having an affinity to both of a vinyl alcohol-based resin layer and a thermoplastic resin (e.g. polyolefin, polyester, or polyamide etc.) layer, and having fluidity when laminated so that the adhesive resin can cover a surface of a layer to be contacted therewith substantially uniformly (see e.g. non-patent document 1). For this reason, for instance, JP 2006-312313A (patent document 1) in paragraph 0051 discloses a carboxylic acid-modified olefin polymer obtained by modifying an olefin polymer with an unsaturated carboxylic acid or an anhydride thereof, as an example of the adhesive resin.

Since the gas barrier property can be improved by stretching a vinyl alcohol-based resin (particularly, EVOH resin) layer, normally, a multilayer film including the vinyl alcohol-based resin layer is subjected to a stretching process. The stretching process is an operation of causing molecular orientation by heating a film to a temperature equal to or lower than a melting point of the film, and mechanically stretching the film.

Further, in recent years, it has been possible to stretch a vinyl alcohol-based resin having a structural unit expressed by the following formula (1) (hereinafter, called as "side chain 1,2-diol unit") at a stretching ratio larger than the stretching ratio of a vinyl alcohol-based resin without having side chain 1,2-diol units. It is known that stretching a resin at a higher stretching ratio enables to secure a higher gas barrier property.

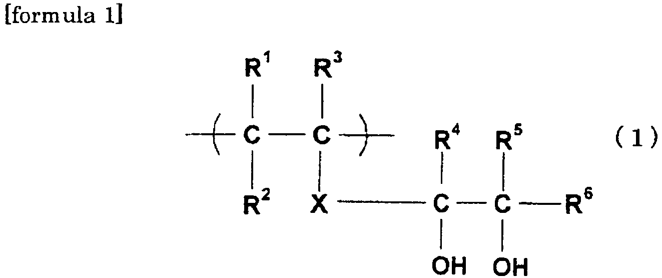

In the formula (1), each of R¹ to R⁶ represents independently hydrogen atom or an organic group, and X represents a single bond or binding chain.

In the case of the above-mentioned multilayer film, since an EVOH resin and a thermoplastic resin have stretching properties different from each other, it is said to be desirable to make an adhesive resin layer as an intervening layer in a fluidized state in stretching a film to eliminate a stretching property difference between an EVOH resin layer and a thermoplastic resin layer. In view of the above, it is a usual practice to select and use an adhesive resin having such a melting point that the adhesive resin can be fluidized in stretching a film.

For instance, in an example in patent document 1, maleic anhydride-modified linear low density polyethylene (melting point: about 80 °C) is used as an adhesive resin, and a multilayer structure comprising a PVA resin layer having side chain 1,2-diol units and a linear low density polyethylene layer (melting point: about 120 °C) is preheated to 100 °C, and subjected to simultaneous biaxial stretching (stretching ratio: 36 times) with 6 times in machine direction and 6 times in transverse direction (see paragraphs 0059 and 0062).

JP 2006-123534A (patent document 2) discloses an example, wherein a multilayer structure using "Modic AP P604V" (trade name of a maleic acid-modified polyolefin resin having a melting point of 134 °C) of Mitsubishi Chemical Corporation as an adhesive resin to adhere an EVOH resin layer having side chain 1,2-diol units to a polypropylene layer (melting point: about 160 °C), and the multilayer structure is preheated to 150 °C for 1 minute, and subjected to successive stretching (stretching ratio: 26 times) with 4 times in machine direction and 6.5 times in transverse direction.

In the case where a resin such as polyethylene having a low melting point and a low softening point is used as a material for a thermoplastic resin film to be laminated, the heating temperature in a stretching process is about 100 °C. On the other hand, in the case where a thermoplastic resin such as polypropylene having a high melting point and a high softening point is used, as shown in the above example in patent document 2, a stretching process is performed at about 150 °C. A fluid of a melted adhesive resin is likely to reduce its viscosity, when exposed to a high temperature. In the case where a carboxylic acid-modified polyolefin resin having a melting point of about 100 °C, as disclosed in patent document 1 or 2, is used as an adhesive resin, and a stretching process is performed at a high temperature of e.g. 150 °C, a stretched multilayer film produced by the above method has undulating streaks, conceivably because of many reasons such that a stretching force in a stretching process may be imparted to an adhesive resin layer having an excessively low viscosity, thereby generating undulating streaks; or that the thickness uniformity of an adhesive resin layer may be lost after the film is stretched, cooled, and fixed. Thus, there is a room for improving the appearance of the stretched multilayer film. In a worse case, an adhesive resin layer as an intervening layer may be torn, and a multilayer film may be ruptured during a stretching process.

On the other hand, JP 2006-123531A (patent document 3) discloses an example, wherein a laminate using "Modic AP M533" (trade name of a maleic acid-modified polyolefin resin having a melting point of 123 °C) of Mitsubishi Chemical Corporation is used as an adhesive resin to adhere an EVOH resin layer having side chain 1,2-diol units to a polyethylene layer, and the laminate is preheated to 80 °C, and subjected to successive biaxial stretching (stretching ratio: 12.25 times) with 3.5 times in machine direction and 3.5 times in transverse direction (see paragraph 0060). The obtained stretched multilayer film is used as a shrink film.

As shown in patent document 3, there is a production example, wherein a stretched multilayer film is produced by stretching a multilayer film at a temperature lower than the melting point of an adhesive resin, using a thermoplastic resin layer having a relatively low melting point of 100 to 120 °C, such as polyethylene or ethylene-vinyl ester copolymer. However, the stretching ratio in the production example is as low as about 13 times, and the use of the above method is limited to producing a multilayer film such as a shrink film, in which an appearance before shrinkage is not so important.

[Non Patent document 1] The Society of Polymer Science, Japan, "Adhesion and Lamination", edit. Chijinshokan Co. Ltd., July, 1965, p1
[Patent document 1] JP2006-312313A
[Patent document 2] JP2006-123534A
[Patent document 3] JP2006-123531A

### DISCLOSURE OF THE INVENTION

### TECHNICAL PROBLEM TO BE SOLVED BY THE INVENTION

The object of the invention is to provide a method for production of a stretched multilayer structure comprising a layer containing a thermoplastic resin having a melting point of 125°C or more, and a layer containing vinyl alcohol-based resin having side chain 1,2-diol unit laminated on each other through an adhesive resin layer. The method enables to produce a stretched multilayer structure which shows excellent appearance regardless of stretching at a high stretching ratio of 15 times or more.

### MEANS FOR SOLVING THE PROBLEMS

The inventors unexpectedly found that a stretched multilayer film obtained by using an adhesive resin layer in a non-fluidized state have superior appearance in the case that a multilayer film where a thermoplastic resin layer having a melting point of 125 °C or more and a vinyl alcohol-based resin layer having side chain 1,2-diol units are laminated on each other through an adhesive resin layer is stretched at a high stretching ratio of 15 times or more.

The inventive method for production of a stretched multilayer structure comprises at least mono-axially stretching a multilayer structure under heating, wherein the multilayer structure comprises
a layer containing (A) vinyl alcohol-based resin having 1,2-diol unit in a side chain thereof represented by the formula (1);
a layer laminated on at least one side of the layer containing (A) vinyl alcohol-based resin, and containing (B) thermoplastic resin having a melting point of 125 to 300°C; and
a layer of (C) adhesive resin intervened between the layer containing (A) vinyl alcohol-based resin and the layer containing (B) thermoplastic resin, wherein the (C) adhesive resin has a melting point higher than the stretching temperature of the multilayer structure, wherein the stretching ratio is in the range of 15 to 100 times in terms of area ratio.

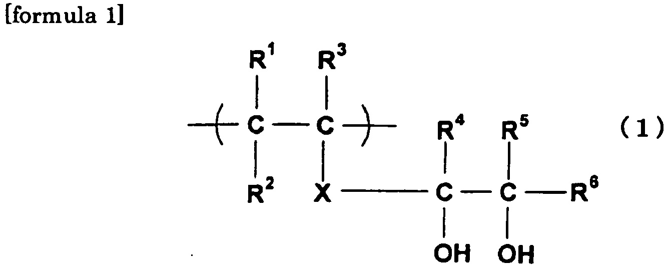

In the general formula (1), each of R¹ to R⁶ represents independently hydrogen atom or an organic group, X represents a single bond or binding chain.

A preferable layer containing (A) vinyl alcohol-based resin having 1,2-diol unit in its side chain contains the 1,2-diol unit in the content of 0.1 to 30 mol%, and a preferable 1,2-diol unit is a structural unit represented by the formula (1a) shown below.

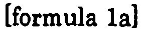

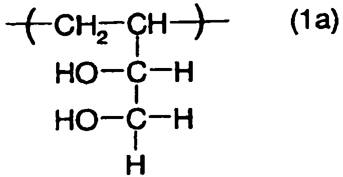

The concept of "vinyl alcohol-based resin (A)" includes a saponified product of vinyl ester-based polymer (i.e. polyvinyl alcohol-based resin) and a saponified product of ethylene-vinyl ester-based copolymer (i.e. EVOH-based resin). The preferable vinyl alcohol-based resin (A) is a saponified product of ethylene-vinyl acetate copolymer having ethylene structural unit in the content of 20 to 60 mol%.

The stretching process is preferably conducted under a temperature fallen in both of the range of 40 to 250°C as a temperature of the multilayer structure to be stretched and the range lower than the melting points of polyvinyl alcohol-based resin (A)-containing layer (sic. correctly "vinyl alcohol-based resin (A)-containing layer") and thermoplastic resin (B)-containing layer.

The (C) adhesive resin has preferably a melting point higher than the stretching temperature by 1 to 40°C. The preferable adhesive resin (C) is carboxylic acid-modified polyolefin-based resin having a melting point higher than the stretching temperature of the multilayer structure to be stretched. The preferable carboxylic acid-modified polyolefin-based resin is a carboxylic acid-modified polypropylene-based resin.

Preferably, the (B) thermoplastic resin is a resin having a melting point of 145 to 200°C, more preferably, a polyolefin-based resin having a melting point of 145 to 200°C, particularly preferably, polypropylene-based resin.

The stretched multilayer structure of the present invention is obtained by stretching a multilayer structure according to the method of the present invention.

The melting point herein refers to a value measured with differential scanning calorimeter (DSC), according to JIS K 7121, by the following: melting resin to be measured by heating to the temperature higher than a melting point of the resin, followed by cooling to 30°C at a rate of 10°C/min and determining the main peak of melting curve obtained by temperature elevation at a rate of 10°C/min.
The stretching temperature herein refers to a value obtained by measuring an atmospheric temperature of a middle portion of a multilayer structure to be stretched at a position away from the multilayer structure by 1cm in vertical direction by a thermocouple type thermometer.

### EFFECT OF THE INVENTION

According to the inventive method for producing a stretched multilayer film, a vinyl alcohol-based resin-containing layer having side chain 1,2-diol units can be stretched along with the thermoplastic resin-containing layer, even if a multilayer film is stretched at a high stretching ratio based on a property of a thermoplastic resin-containing layer, because a tension force to be exerted in a stretching process can be uniformly distributed on the entirety of the multilayer film through an adhesive resin layer. Thus, a stretched multilayer film having superior appearance can be obtained even if the stretched multilayer film is produced by stretched at a high stretching ratio.

### BEST MODE FOR CARRYING OUT OF THE INVENTION

Hereinafter, the present invention will be described in detail. The description below merely illustrates one embodiment (typical embodiment) of the present invention, and this should not be construed as limiting the scope of the invention.

A method for production of a stretched multilayer film comprising at least mono-axially stretching a multilayer structure under heating, wherein the multilayer structure comprises a layer containing (A) vinyl alcohol-based resin having 1,2-diol unit in a side chain thereof represented by the formula (1), a layer which is laminated on the layer containing (A) vinyl alcohol-based resin and contains (B) thermoplastic resin having a melting point of 125 to 300°C, and a layer of (C) adhesive resin intervened between the layer containing (A) vinyl alcohol-based resin and the layer containing (B) thermoplastic resin, and wherein the (C) adhesive resin has a melting point higher than the stretching temperature of the multilayer structure wherein the stretching ratio is as defined above.

First, layers constituting the multilayer structure to be used in the production of the present invention will be described.

### <Vinyl alcohol-based resin (A)-containing layer>

A vinyl alcohol-based resin (A)-containing layer of the multilayer structure to be used in the production is a layer containing (A) vinyl alcohol-based resin having 1,2-diol unit in its side chain represented by the formula (1) shown below. Hereinafter, the 1,2-diol unit represented by the formula (1) is referred to as "side chain 1,2-diol", and "vinyl alcohol-based resin (A)" is used as the same meaning as "(A) side chain 1,2-diol-modified vinyl alcohol-based resin".

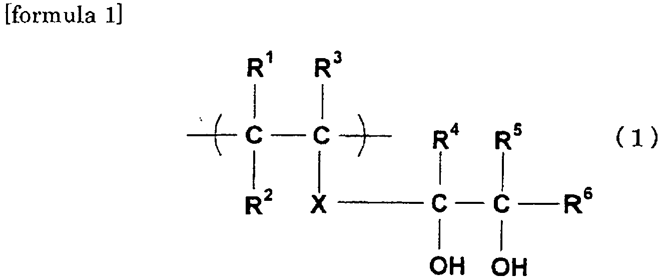

In the formula (1), each of R¹ to R⁶ represents independently hydrogen atom or an organic group. Non-limiting examples of the organic group include saturated hydrocarbon groups such as methyl, ethyl, n-propyl, iso-propyl, n-butyl, iso-butyl, and tert-butyl; aromatic hydrocarbon groups such as phenyl, benzyl and the like; halogen atoms; hydroxyl group; acyloxy groups; alkoxycarbonyl groups; carboxyl groups; sulfonic acid, and the like. Among them, a saturated hydrocarbon group having 1 to 30 (preferably 1 to 15, more preferably 1 to 4) carbon atoms, and hydrogen atom are particularly preferable. Hydrogen atom is the most preferable. It is preferable that all of R¹ to R⁶ are hydrogen atoms.

In the formula (1), X is a single bond or binding chain. A single bond is preferable in view of gas barrier property etc. of vinyl alcohol-based resin (A).
Examples of the binding chain include, but not limited to, a hydrocarbon chain such as alkylene, alkenylene, alkinylene, phenylene and naphthylene (these hydrocarbons can be substituted with a halogen such as fluorine, chlorine, or bromine etc.); an ether binding site-containing structural unit such as -O-, -(CH₂O)ₘ-, -(OCH₂)ₘ-, -(CH₂O)ₙCH₂-; a carbonyl group-containing structural unit such as -CO-, -COCO-, -CO(CH₂)ₘCO-, -CO(C₆H₄)CO- ; a sulfur atom-containing structural unit such as -S-, -CS-, -SO-, -SO₂-; a nitrogen atom-containing structural unit such as -NR-, -CONR-, -NRCO-, -CSNR-, -NRCS-, -NRNR-; a hetero atom (e.g. phosphorus atom)-containing structural unit such as -HPO₄-; a metal atom-containing structural unit such as silicon atom-containing structural unit (-Si(OR)₂-, -OSi(OR)₂-, -OSi(OR)₂O-), titanium atom-containing structural unit (-Ti(OR)₂-, -OTi(OR)₂-, -OTi(OR)₂₀-), aluminum atom-containing structural unit (-Al(OR)-, -OAl(OR)-, -OAl(OR)O-), wherein each of R represents independently any substituent, preferably hydrogen atom or an alkyl group and m is positive integer, usually 1 to 30, preferably 1 to 15, more preferably 1 to 10. Among these binding chains, a hydrocarbon chain having 1 to 10 carbon atoms is preferable, a hydrocarbon chain having 1 to 6 carbon atoms is more preferable, a hydrocarbon chain having 1 carbon atom is the most preferable, from the viewpoint of stability in preparing or using.

The most preferable structure of the 1,2-diol unit represented by the formula (1) is a structural unit where all of R¹ to R⁶ are hydrogen atoms and X is a single bond, that is, the structural unit represented by the formula (1a) shown below.

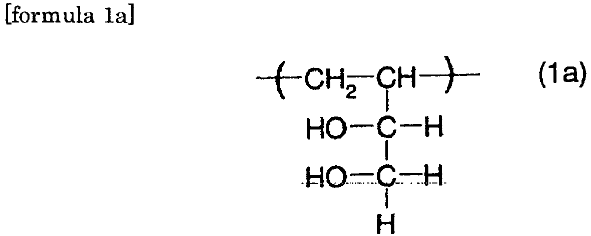

(A) side chain 1,2-diol-modified vinyl alcohol-based resin has a lower melting point, and an excellent stretching property, as compared with a vinyl alcohol-based resin without side chain 1,2-diol unit, thus the (A) side chain 1,2-diol-modified vinyl alcohol-based resin can be subjected to a stretching treatment at a high stretching ratio.

The content of side chain 1,2-diol units with respect to the (A) side chain 1,2-diol-modified vinyl alcohol-based resin is from normally 0.1 to 30 mol%, preferably 0.5 to 25 mol%, and particularly preferably 1 to 20 mol%. An excessively small content of side chain 1,2-diol units may lower the extension degree of the vinyl alcohol-based resin (A)-containing layer, and the vinyl alcohol-based resin (A)-containing layer may be ruptured in a stretching process, or even if a stretched film including the vinyl alcohol-based resin (A)-containing layer is obtained, the appearance of the stretched film may be deteriorated due to generation of undulating streaks. On the other hand, an excessively large content of side chain 1,2-diol units may lower the gas barrier property.
In this embodiment, the amount of side chain 1,2-diol units can be calculated based on a measurement result on ¹H-NMR.

A vinyl alcohol-based resin of (A) side chain 1,2-diol-modified vinyl alcohol-based resin include a saponified product of a vinyl ester-based polymer (i.e. polyvinyl alcohol-based resin or PVA-based resin) and a saponified product of an ethylene-vinyl ester-based copolymer (i.e. EVOH-based resin). Accordingly, a side chain 1,2-diol-modified PVA-based resin or a side chain 1,2-diol-modified EVOH-based resin is used as (A) side chain 1,2-diol-modified vinyl alcohol-based resin, wherein the 1,2-diol unit is represented by the formula (1).

The side chain 1,2-diol-modified PVA-based resin is a saponified product of the copolymer comprising a vinyl ester monomer, a monomer forming the side chain 1,2-diol unit, and an optionally added monomer copolymerizable with the vinyl ester within the range of not impairing properties of PVA. Accordingly, the side chain 1,2-diol-modified PVA-based resin comprises a vinyl alcohol unit, a side chain 1,2-diol unit, a structural unit derived from the copolymerizable monomer, and remaining vinyl ester unit unsaponified. The total content of the vinyl alcohol structural unit and the side chain 1,2-diol unit in the copolymer is normally in the range of 80 to 100 mol%.

The side chain 1,2-diol-modified EVOH-based resin is a saponified product of the copolymer of ethylene, a vinyl ester monomer, and a monomer forming side chain 1,2-diol unit, and an optionally added monomer copolymerizable with the vinyl ester and/or ethylene within the range of not impairing properties of EVOH resin. Accordingly, the side chain 1,2-diol-modified EVOH-based resin comprises ethylene structural unit, vinyl alcohol structural unit, side chain 1,2-diol unit, a structural unit derived from the copolymerizable monomer, and remaining vinyl ester unit unsaponified.
The content of the ethylene structural unit in the side chain 1,2-diol-modified EVOH-based resin is in the range of usually 20 to 60 mol%, preferably 20 to 50 mol%, particularly preferably 25 to 48 mol%. When the content of the ethylene structural unit is unduly low, gas barrier property under a high humidity condition tends to be lowered because of its high moisture absorption, and the appearance tends to be deteriorated. To the contrary, when the content of the ethylene structural unit is unduly high, gas barrier property tends to be lowered due to reduction of the content of OH groups. The total content of vinyl alcohol structural unit and side chain 1,2-diol unit is usually in the range of 40 to 80 mol%.

Examples of the vinyl ester monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzonate, vinyl versatate and the like. Among them, vinyl acetate is preferably used from the economic viewpoint.

Examples of the monomer copolymerizable with the vinyl ester monomer and/or ethylene without impairing the properties of PVA or EVOH (hereinafter, collectively referred to as "other copolymerizable monomer") include olefins such as propylene, 1-butene, and isobutene; unsaturated acids such as acrylic acid, methacrylic acid, crotonic acid, phthalic acid (anhydrous), maleic acid (anhydrous), and itaconic acid (anhydrous), or a salt thereof, or a mono- or dialkyl ester having 1 to 18 carbon atoms; acrylamides such as acrylamide, N-alkyl acrylamide having 1 to 18 carbon atoms, N,N- dimethyl acrylamide, 2-acrylamide propane sulfonic acid or a salt thereof, and acrylamide propyldimethylamine or an acid salt or quantenary salt; methacrylamides such as methacrylamide having 1 to 18 carbon atoms, N-alkyl methacrylamide, N,N-dimethyl methacrylamide, 2-methacrylamidepropanesulfonic acid or a salt thereof, and methacrylamidepropyldimethylamine or an acid salt or quantenary salt; N-vinyl amides such as N-vinyl pyrrolidone, N-vinyl formamide, and N-vinyl acetoamide ; vinyl cyanides such as acrylonitrile and methacrylonitrile; vinyl ethers such as alkyl vinyl ether having 1 to 18 carbon atoms, hydroxy alkyl vinyl ether, and alkoxy alkyl vinyl ether; halogenated vinyl compounds such as vinyl chloride, vinylidene chloride, vinyl fluoride, vinylidene fluoride, and vinyl bromide; vinylsilanes such as trimethoxyvinylsilane; allyl acetate, allyl chloride, allyl alcohol, dimethyl allyl alcohol, trimethyl(3-acrylamide-3-dimethylpropyl)-ammonium chloride, acrylamide-2-methylpropanesulfonic acid, glycerin monoallylether, ethylene carbonate, and the like. Furthermore, acetoacetyl group-containing monomers or cationic group-containing monomers such as N-acrylamide methyltrimethyl ammoniumchloride, N-acrylamide ethyltrimethyl ammoniumchloride, N-acrylamide propyltrimethyl ammoniumchloride, 2-acryloxy ethyltrimethyl ammoniumchloride, 2-methacryloxy ethyltrimethyl ammoniumchloride, 2-hydroxy-3-methacryloyl oxypropyltrimethyl ammoniumchloride, allyl trimethyl ammoniumchloride, methallyl trimethyl ammoniumchloride, 3-butene trimethyl ammoniumchloride, dimethyl diallyl ammoniumchloride, and diethyl diallyl ammoniumchloride may be used. These monomers may be used alone or in combination of two or more of them.

A vinyl alcohol-based resin (A) to be used in the invention may be produced by the following methods described for an example of the vinyl alcohol-based resin having the structural unit (1a) as the most preferable structural unit: [1] a method of copolymerizing a vinyl ester monomer (and ethylene in the case of producing EVOH resin) with a comonomer providing the 1,2-diol unit in a side chain (e.g. 3,4-diol-1-butene, 3,4-diacyloxy-1-butene, 3-acyloxy-4-ol-1-butene, 4-acyloxy-3-ol-1-butene, or 3,4-diacyloxy-2-methyl-1-butene etc.), followed by saponifying the resultant copolymer ; [2] a method of copolymerizing a vinyl ester monomer (and ethylene in the case of producing EVOH resin) with vinyl ethylene carbonate or the like as a comonomer providing the 1,2-diol unit in a side chain, followed by saponifying and decarboxylating the resultant copolymer ; [3] a method of copolymerizing vinyl ester monomer (and ethylene in the case of producing EVOH resin) with 2,2-dialkyl-4-vinyl-1,3-dioxolane or the like as a comonomer providing the 1,2-diol unit in a side chain, followed by saponifying and deacetalizing the resultant copolymer; and the like method.

Among these production methods, the method [1] is preferable. In the method [1], 3,4-diacyloxy-1-butene is preferably employed due to its high copolymerization reactivity. The method [1] where 3,4-diacetoxy-1-butene is employed as the 3,4-diacyloxy-1-butene, is further more preferable. The method [1] is advantageous, because copolymerization reaction using 3,4-diacetoxy-1-butene can proceed smoothly to introduce 1,2-diol unit into a side chain of the vinyl alcohol-based resin main chain easily and evenly, as a result, unreacted monomers are reduced and an impurity contained in the layer containing vinyl alcohol-based resin (A) is reduced.

Concretely, where vinyl acetate and 3,4-diacetoxy-1-butene are copolymerized, the monomer reactivity ratios are r (vinyl acetate) = 0.710 and r (3,4-diacetoxy-1-butene) = 0.701. For comparison, where vinyl ethylene carbonate used in the method [2] and vinyl acetate are copolymerized, the monomer reactivity ratios are r (vinyl acetate) = 0.85 and r (vinyl ethylene carbonate) = 5.4. Therefore, 3,4-diacetoxy-1-butene is superior in copolymerization activity with vinyl acetate.
Also, the chain transfer constant of 3,4-diacetoxy-1-butene is Cx(3,4-diacetoxy-1-butene) =0.003(65°C), which is lower than the chain transfer constant of vinyl ethylene carbonate used in the method [2] (Cx (vinyl ethylene carbonate ) =0.005(65°C)) or the chain transfer constant of 2,2-dimethyl-4-vinyl-1,3-dioxolane used in the method [3] (Cx(2,2-dimethyl-4-vinyl-1,3-dioxolane)=0.023 (65°C)). Therefore, it is understood that the 3,4-diacetoxy-1-butene could prevent the polymerization rate from being lowered and keep elevation of polymerization degree without hindrance.

Furthermore, a byproduct generated by saponification of the copolymer of 3,4-diacetoxy-1-butene and vinyl acetate corresponds to one derived from vinyl acetate structural unit. Accordingly, the method [1] where 3,4-diacetoxy-1-butene is used has an additional industrial advantage that does not require a special equipment or some steps for post-treatment.

On the other hand, in the case where a saponification degree is low or decarbonation is insufficient, a carbonate ring may remain in a side chain of the side chain 1,2-diol-modified vinyl alcohol-based resin produced by the method [2], and the remaining carbonate ring may be subjected to decarbonation in melt molding, with the result that the resin may be foamed. Further, similarly to the production method [2], a monomer-derived functional group (acetal ring) remaining in a side chain of the side chain 1,2-diol-modified vinyl alcohol-based resin produced by the method [3], may be eliminated in melt molding, and odor is likely to be emitted. Therefore, it is necessary to use these resins, considering the above points.

3;4-diol-1-butene used as a raw material in the method [1] is commercially available from Eastman Chemical Company. 3,4-diacetoxy-1-butene used for manufacture is commercially available from Eastman Chemical Company. 3,4-diacetoxy-1-butene as a product by Across Company is available for reagent quality one. 3,4-diacetoxy-1-butene obtained as a byproduct in manufacturing 1,4-butane diol may also be used. 3,4- diacetoxy-1-butene to be used as a raw material may contain 3,4-diacetoxy-1-butane, 1,4-diacetoxy-1-butene, or 1,4-diacetoxy-1-butane, as small amounts of impurities.

A (A) side chain 1,2-diol-modified vinyl alcohol-based resin used in the invention is prepared by the above-mentioned methods.
The saponification degree of the (A) side chain 1,2-diol-modified vinyl alcohol-based resin, that is, the content of vinyl alcohol structural unit obtained by saponification of vinyl ester structural unit in vinyl alcohol-based resin, is not particularly limited to, but in the range of usually 90 to 100 mol%, preferably 95 to 100 mol%, more preferably 99 to 100 mol%. When the saponification degree is unduly low, its gas barrier property and moisture resistance tend to be lowered.

The melting point of the (A) side chain 1,2-diol-modified vinyl alcohol-based resin having the above-mentioned structure falls in the range of normally 100 to 220°C, preferably 130 to 200°C, more preferably 150 to 190°C.

The melt flow rate (MFR) (210°C, loading: 2160g) of the (A) side chain 1,2-diol-modified vinyl alcohol-based resin is in the range of usually 0.1 to 100g/10 minutes, preferably 1 to 50g/10 minutes, more preferably 2 to 35g/10 minutes. An unduly low MFR tends to cause a high torque condition in an extruder during molding, resulting in difficult extrusion molding. To the contrary, an unduly high MFR causes to lower the precision of thickness of the layer containing vinyl alcohol-based resin (A) produced.

The vinyl alcohol-based resin (A)-containing layer may contain one kind of as well as a combination of two or more kinds of (A) side chain 1,2-diol-modified vinyl alcohol-based resin(s). Examples of the combination include a combination of (A) side chain 1,2-diol-modified vinyl alcohol-based resins having different saponification degree, molecular weight and so on from each other, and a combination of (A) side chain 1,2-diol-modified vinyl alcohol-based resins containing different kinds of other copolymerizable monomers as a component thereof.

In the case that side chain 1,2-diol-modified EVOH-based resin is used as (A) side chain 1,2-diol-modified vinyl alcohol-based resin, a combination of vinyl alcohol-based resins (A) having different ethylene structural unit content from each other may be employed. When vinyl alcohol-based resins (A) having different ethylene structural unit content are combined, they may have the same or different structural units other than the ethylene structural unit. The difference in the ethylene content is usually 1 mol% or more, preferably 2 mol% or more, more preferably from 2 to 20 mol%. The excessively large difference in the ethylene content may cause to impair the stretching property.

In addition, PVA-based resin without side chain 1,2-diol unit or EVOH-based resin without side chain 1,2-diol unit may be used together. When vinyl alcohol-based resin (A)-containing layer contains other vinyl alcohol-based resin in addition to side chain 1,2-diol-modified vinyl alcohol-based resin, the other vinyl alcohol-based resin is mixed so that the content of side chain 1,2-diol unit falls in the range of usually 0.1 to 30 mol%, preferably 0.5 to 25 mol%, more preferably 1 to 20 mol%, based on the vinyl alcohol-based resin.

When a mixture of two or more kinds of (A) side chain 1,2-diol-modified vinyl alcohol-based resins is used, the mixture may produce by a method comprising mixing pastes of unsaponified vinyl ester based copolymers and then saponifying the mixture; a method comprising preparing individual solutions by solving vinyl alcohol-based resins obtained by saponification in alcohol or a mixed solvent of water and alcohol, and then mixing the prepared solutions; a method comprising mixing pellets or powders of the vinyl alcohol-based resins and then melt-kneading; or the like method, but not limited thereto.

A vinyl alcohol-based resin (A)-containing layer may be constructed with the above-mentioned side chain 1,2-diol-modified vinyl alcohol-based resin alone. As long as the effect of the present invention is not inhibited, a vinyl alcohol-based resin (A)-containing layer may further contain other polymers but vinyl alcohol-based resin, some additives, or inevitable impurities, an unused or saponified monomer in production of vinyl alcohol-based resin (A).

Examples of the inevitable impurities include 3,4-diacetoxy-1-butene, 3,4-diol-1-butene, 3,4-diacetoxy-1-butene, 3-acetoxy-4-ol-1-butene, 4-acetoly-3-ol-1-butene.

Examples of the additives include slipping agent such as a saturated aliphatic amide (e.g. stearamide), an unsaturated fatty acid amide (e.g. oleamide), bis-fatty acid amide (e.g. ethylene bis stearamide), low molecular weight polyolefin (e.g. low molecular weight polyethylene having a molecular weight of about 500 to 10,000, or low molecular weight polypropylene) and so on; insoluble inorganic salt (e.g. hydrotalcite), plasticizer such as aliphatic polyalcohol (e.g. ethylene glycol, glycerin, hexane diol); light stabilizer; antioxidant; ultraviolet absorber; colorant; antistatic agent; surfactant; antimicrobial agent; antiblocking agent; filler (e.g. inorganic filler); oxygen absorber or the like.

In order to improve some properties such as heat stability in melt-molding, additives such as acid, organic acids such as propionic acid, butyric acid, lauric acid, stearic acid, oleic acid, behenic acid, or their alkali metal (e.g. sodium, potassium) salts, alkaline earth metal (e.g. calcium, magnesium) salts or the like salt; inorganic acids such as sulfuric acid, sulfurous acid, carbonic acid, phosphoric acid, boric acid or their salt such as alkali metal (e.g. sodium, potassium) salts, and alkaline earth metal (e.g. calcium, magnesium) salts may be added, in addition to the above-mentioned additives. Among these additives, a boric compound including boric acid and a salt thereof, an acetate including acetic acid and a salt thereof, and phosphate are preferably added.

In the case where an acetic acid is added, the added amount is in the range of usually 0.001 to 1 parts by weight, preferably 0.005 to 0.2 parts by weight, more preferably 0.010 to 0.1 parts by weight based on 100 parts by weight of vinyl alcohol-based resin (A). The excessively low amount of acetic acid may fail to impart a sufficient effect, to the contrary, the excessively high amount of acetic acid tends to make it difficult to obtain uniform film.

In the case where a boric compound is added, the added amount of boric compound is normally 0.001 to 1 parts by weight, preferably 0.002 to 0.2 part by weight, and particularly preferably 0.005 to 0.1 parts by weight based on 100 parts by weight of the vinyl alcohol-based resin (A) in the content of boron (analyzed by ICP emission spectrometry after incineration). An excessively low amount of boric compound may fail to obtain a sufficient effect by adding a boric compound. On the other hand, an excessively high amount of boric compound may make it difficult to obtain a uniform film.

The amount of acetate and phosphate (including hydrogen phosphate) to be added is from normally 0.0005 to 0.1 parts by weight, preferably 0.001 to 0.05 parts by weight and particularly preferably 0.002 to 0.03 parts by weight based on 100 parts by weight of the vinyl alcohol-based resin (A) in the content of metal (analyzed by ICP emission spectrometry after incineration). An excessively low amount of the additive may fail to obtain a sufficient effect by adding the additive. On the other hand, an excessively high amount of the additive may make it difficult to obtain a uniform film. In the case where salts of two or more kinds are added to the vinyl alcohol-based resin (A), preferably, the total amount of the salts lies in the range of the amount of the above additives.

A method for adding a boric compound, acetate, and phosphate to the side chain 1,2-diol-modified vinyl alcohol-based resin (A) is not specifically limited, but one of the following methods i) through iv) may be used:
i) a method comprising contacting a porous precipitate of the (A) side chain 1,2-diol-modified vinyl alcohol-based resin of 20 to 80 wt. % in moisture content, with an aqueous solution containing the additives to obtain the resin containing the additives, followed by drying;
ii) a method comprising: containing additives in a homogenized solution (water/alcohol solution etc.) of the (A) side chain 1,2-diol-modified vinyl alcohol-based resin; extruding strands of resin in a solidifying solution; cutting the strands into pellets; and drying;
iii) a method comprising: mixing a batch of additives and the (A) side chain 1,2-diol-modified vinyl alcohol-based resin; and melting and kneading the mixture by a kneader or a like device; and
iv) a method, in producing the (A) side chain 1,2-diol-modified vinyl alcohol-based resin comprising: neutralizing an alkali (such as sodium hydroxide or potassium hydroxide) used in a saponification step with organic acids such as acetic acid; and adjusting the amount of organic acids such as acetic acid residues or a byproduct salt by a water washing process.
The methods i) and ii) superior in dispersing an additive is preferable to obtain the effect of the invention more effectively, and the method iv) is preferable to contain an organic acid and a salt thereof.

A composition for the vinyl alcohol-based resin (A)-containing layer can be prepared by blending the above-mentioned vinyl alcohol-based resins (A), other polymer, and additives optionally added, and melt-kneading. The content of (A) side chain 1,2-diol-modified vinyl alcohol-based resin(s) in the composition is sufficient enough that the layer made from the composition can exhibit properties of (A) side chain 1,2-diol-modified vinyl alcohol-based resin, and is in the range of preferably 70% by weight or more, more preferably 80% by weight or more, further more preferably 90% by weight or more. The total content of the additives is in the range of usually less than 30% by weight, preferably less than 20% by weight, more preferably less than 10% by weight.

### <Thermoplastic resin (B)-containing layer>

A (B) thermoplastic resin to be used in the thermoplastic resin (B)-containing layer has a melting point of 125 to 300 °C, and preferably 135 to 250 °C. A thermoplastic resin having a melting point of 145 to 200 °C is particularly preferably used in the aspect of availability in the market and its superior moisture resistance. There is a less demand for improving the appearance of a stretched multilayer film using a thermoplastic resin having a melting point of less than 125 °C. However, there is a demand for use of a polypropylene resin having a melting point of 145 °C or more, because the polypropylene resin has such a property that the melting point thereof is lowered, a random copolymer containing structural units such as ethylene unit is likely to be formed, with the result that the moisture resistance is lowered. Use of a thermoplastic resin having a melting point of 145 to 200 °C is preferable, because the melting point of the thermoplastic resin is near one of the (A) side chain 1,2-diol-modified vinyl alcohol-based resin.

A (B) thermoplastic resin to be used in the present invention is usually a thermoplastic resin other than (A) side chain 1,2-diol-modified vinyl alcohol-based resin, particularly, hydrocarbon-based resins such as aliphatic hydrocarbon-based resin and aromatic hydrocarbon-based resin; ionomer, polyacrylic acid-based resin, polyacrylate-based resin, polyester-based resin, polyamide-based resin including polyamide copolymer, poly(vinyl chloride), poly(vinylidene chloride), acrylic resin, polyester elastomer, polyurethane elastomer, chlorinated polyethylene, chlorinated polypropylene, aromatic- or aliphatic polyketone, and polyalcohols obtained by reducing them. Examples of the aliphatic hydrocarbon-based resin include polypropylene-based resin such as polypropylene, α olefin-modified polypropylene in which C₂ to C₂₀ hydrocarbon compound having ethylenically unsaturated bond other than propylene is used as the α olefin, polybutene-based resin, and polypenten-based resin and so on. Examples of the aromatic hydrocarbon-based resin include polystyrene, polyallyl benzene and so on, and/or a resin graft modified with their unsaturated carboxylic acid or their ester. As the (B) thermoplastic resin, hydrocarbon-based resin is preferable, aliphatic hydrocarbon-based resin is more preferable, and polypropylene-based resin is particularly preferable from the fact that they can give the excellent strength and hydrophobicity to the stretched multilayer structure produced.

The thermoplastic resin (B)-containing layer may contain conventionally known typical additives, for instance, antioxidant, antistatic agent, slipping agent, nuclear agent, antiblocking agent, ultraviolet absorber, wax and so on within the range of not inhibiting the gist of the invention. In the case of containing these additives, a thermoplastic resin (B)-containing layer contains the thermoplastic resin (B) at a content of usually 70% by weight or more, preferably 80% by weight or more. Accordingly, the total content of these additives is in the range of usually less than 30% by weight, preferably less than 20% by weight.

### <Adhesive resin (C) layer>

The (C) adhesive resin to be used in the adhesive resin (C) layer is described.
The (C) adhesive resin to be used in the inventive method is a thermoplastic resin having a melting point higher than a stretching temperature. In the embodiment, the stretching temperature is a value obtained by measuring an atmospheric temperature of a middle portion of a multilayer structure to be stretched at a position away from the multilayer structure by 1 cm in vertical direction with use of a thermocouple type thermometer.

A stretched multilayer structure can be produced without generating undulating streaks by employing a thermoplastic resin which is softened but unmelt in a stretching process as the (C) adhesive resin, even if the multilayer film comprising a layer containing (B) thermoplastic resin having a melting point of 125°C or more, and a layer containing (A) side chain 1,2-diol-modified vinyl alcohol-based resin was subjected to stretch at a high ratio. The mechanism of this effect is not made clear, but is conceivably understood that the multilayer film is stretched with a softened layer of the (C) adhesive resin where a tension force to be exerted in a stretching process can be distributed uniformly, and thus the stretched multilayer film retaining an even surface without undulating streaks is obtained.

A melting point of the adhesive resin (C) is higher than a stretching temperature in a stretching process, usually 1 to 40°C higher, preferably 1 to 30°C higher than the stretching temperature in the stretching process. When a melting point of adhesive resin (C) is higher than the stretching temperature by over 40°C, the adhesive resin (C) layer is not sufficiently softened, in a worse case, a multilayer film may be ruptured by a tension exerted in a stretching process.

An (C) adhesive resin to be used in the invention may be a thermoplastic resin having the above-mentioned range of melting points. A preferable resin for the adhesive resin (C) has a chemical structure similar to thermoplastic resin (B) and has a polar group having affinity for the layer containing (A) side chain 1,2-diol-modified vinyl alcohol-based resin, in order to achieve a role of an adhesive layer intervened between the thermoplastic resin (B)-containing layer and side chain 1,2-diol-modified vinyl alcohol-based resin (A)-containing layer.

Examples of the preferable adhesive resin (C) include acrylate-based resin, polyvinyl alcohol-based resin, polyester-based resin, polyurethane-based resin, and carboxylic acid-modified polyolefin-based resin. Where a hydrocarbon resin is used as the (B) thermoplastic resin, carboxylic acid-modified polyolefin-based resin is preferably used as the (C) adhesive resin. Examples of the polyolefin-based resin include aliphatic polyolefin-based resin such as polyethylene-based resin, and polypropylene-based resin. Among them, polyethylene-based resin and polypropylene-based resin are preferred, polypropylene-based resin is particularly preferred.

The carboxylic acid-modified polyolefin-based resin means a resin obtainable by forming a chemical bond between polyolefin-based resin and unsaturated carboxylic acid or anhydrate thereof by addition reaction or graft reaction and so on.
The polyolefin-based resin includes homopolymer or copolymer obtained by polymerizing olefin monomers, as well as a copolymer obtained by copolymerizing olefin monomer with other monomer copolymerizable therewith within the range of not inhibiting the gist of the invention.

Examples of the copolymerizable monomer include C₂ to C₂₀ hydrocarbon compound having ethylenically unsaturated bond, in particular, include aliphatic olefins such as ethylene, propylene, butene, 3-methyl-butene-1, 3-methyl-penten-1, hexene, octene, and decene; aromatic olefins such as styrene and allyl benzene; cycloolefins such as vinylcyclohexene, vinylcyclopentane, cyclohexene, norbornene, dicyclopentadiene, and 5-ethylidene-2-norbornene; aliphatic diolefins such as butadiene and 1,5-hexadiene; aromatic diolefins such as divinylbenzene; vinyl esters such as ethyl acrylate and vinyl acetate. These olefins may be used alone or in combination with two or more of them. Among these olefins, aliphatic olefins are preferable. Where a carboxylic acid-modified polypropylene-based resin is used for the adhesive resin (C), ethylene is preferably copolymerized.

Non-limiting examples of the unsaturated carboxylic acid or anhydride thereof used for modification of the polyolefin-based resin include monounsaturated carboxylic acids such as arylic acid, methacrylic acid, and anhydride thereof; dicarboxylic acids such as fumaric acid, maleic acid, and anhydride thereof.
The content of the unsaturated carboxylic acid and its anhydride in carboxylic acid-modified polyolefin-based resin is in the range of usually 0.001 to 3% by weight, preferably 0.01 to 1% by weight, more preferably 0.03 to 0.5% by weight. Excessively low modification ratio corresponding to the content of unsaturated carboxylic acid and its anhydride in the carboxylic acid-modified polyolefin-based resin may not achieve sufficient adhesiveness, and to the contrary, excessively high modification ratio tends to occur crosslinking reaction and impair moldability.

The melting point of the (C) adhesive resin having the above-mentioned construction depends on the melting point of its main components. For instance, when a carboxylic acid-modified polyolefin resin is used as (C) adhesive resin, the melting point of the carboxylic acid-modified polyolefin resin depends on the composition of the polyolefin-based resin as the main component thereof. In general, a copolymer tends to have a higher melting point with increasing the number of carbon atoms of α olefin copolymerized, and a copolymer tends to have a lower melting point with increasing the α olefin content to the copolymer. Accordingly, the (C) adhesive resin may employ a random copolymer or block copolymer in which a kind or a content of olefin monomer in the copolymer is properly adjusted such that the melting point of the copolymer meets the requirements of the invention.

As long as a resin has a melting point meeting the requirements of the invention, the resin may be used alone or in combination with two or more of them, for the adhesive resin (C) layer. In addition, PVA-based resin, rubber-elastomer such as polyisobutylene, α olefin-propylene rubber, optionally other thermoplastic resin or the like may be blended. In particular, in the case that a carboxylic acid-modified polyolefin-based resin is used for the (C) adhesive resin, a different polyolefin resin from one used in the carboxylic acid-modified polyolefin-based resin may be blended.

### < Multilayer structure >

A multilayer structure used in a production method of the invention comprises the above-mentioned side chain 1,2-diol-modified vinyl alcohol-based resin (A)-containing layer, the above-mentioned thermoplastic resin (B)-containing layer laminated on the resin (A)-containing layer, and the (C)adhesive resin layer intervened between the resin (A)-containing layer and the thermoplastic resin (B)-containing layer.

Examples of the lamination method include a method comprising simultaneously melt-extruding and laminating a composition for thermoplastic resin (B)-containing layer on a film or sheet containing the vinyl alcohol-based resin (A) and vice versa (i.e. a method comprising simultaneously melt-extruding and laminating a compositions for vinyl alcohol-based resin (A)-containing layer on a film or sheet containing the thermoplastic resin (B)); a method comprising co-extruding a composition for vinyl alcohol-based resin (A)-containing layer and a composition for thermoplastic resin (B)-containing layer. Among them, the method comprising co-extruding is preferable because an obtained multilayer film has an excellent stretching property. Typical PVA-based resins having a vinyl alcohol unit content of 80 mol% or more are well known to have difficulties in melt-extrusion molding, however, a side chain 1,2-diol-modified PVA-based resin to be used in the invention can be melt-extrusion molded without difficulties, due to side chain 1,2-diol units.

As for the co-extruding method, for instance, tubular film method, T-die method, multi-manifold die method, feed block method, or multi-slot die method may be employed. As for dice used in adhesion outside of die process and so on, T-dice, circular die etc. may be used. A melt molding temperature in melt-extruding is in the range of normally 150 to 300°C.

A multilayer structure to be used in the production method of the invention may have a layer formation where the thermoplastic resin (B)-containing layer is disposed on at least one side of vinyl alcohol-based resin (A)-containing layer through adhesive resin (C). Not only the double layer structure of a/b but also arbitrary combinations such as b/a/b, a/b/a, a1/a2/b, a/b1/b2, b2/b1/a/b1/b2, b2/b1/a/b1/a/b1/b2 are possible, wherein "a" (a1, a2, ...) represents a layer containing vinyl alcohol-based resin (A), and "b" (b1, b2, ...) represents a layer containing thermoplastic resin (B),
If the multilayer structure comprises a recycled layer made from a mixture of vinyl alcohol-based resin (A) and thermoplastic resin (B), b/R/a, b/R/a/b, b/R/a/R/b, b/a/R/a/b, b/R/a/R/a/R/b and the like are possible, wherein the recycled layer is referred to as "R".
The multilayer structure may further comprise a layer containing other vinyl alcohol-based resin or a thermoplastic resin different from one used in the thermoplastic resin-containing layer, and the layer may be disposed on an arbitrary position.

The thickness of the multilayer structure having the above-mentioned construction is selected from the range of usually 70 to 15000µm, preferably 220 to 7500µm. The thickness of each layer of the multilayer structure depends on layer formation, use, packaging embodiment, and required properties, and so on. The thickness of the vinyl alcohol-based resin (A)-containing layer is selected from the range of usually 7 to 7500µm, preferably 35 to 3000µm. The thickness of the thermoplastic resin (B)-containing layer is selected from the range of usually 70 to 13500µm, preferably 220 to 6000µm. The thickness of the adhesive resin (C) layer is selected from the range of usually 7 to 7500µm, preferably 7 to 1500µm.

The vinyl alcohol-based resin (A)-containing layer is thicker than the adhesive resin (C) layer, and the ratio of the thickness of the vinyl alcohol-based resin (A)-containing layer to the thickness of the adhesive resin (C) layer, (i.e. vinyl alcohol-based resin (A)-containing layer / adhesive resin (C) layer) is in the range of usually 1 to 100, preferably 1 to 50, more preferably 1 to 10. The total thickness of vinyl alcohol-based resin (A)-containing layers is larger than one of thermoplastic resin (B)-containing layers in the multilayer structure, and the ratio of the total thicknesses (i.e. thermoplastic resin (B)-containing layers / vinyl alcohol-based resin (A)-containing layers) is in the range of usually 1 to 100, preferably 3 to 20, more preferably 6 to 15.

### <Production of stretched multilayer film>

The inventive method for producing a stretched multilayer film is a method for stretching the multilayer film having the above construction.
The stretching temperature of the multilayer film means a temperature of an atmospheric temperature of a middle portion of the multilayer film at a position away therefrom by 1 cm in vertical direction measured with a thermocouple type thermometer. The stretched temperature is lower than the melting points of the side chain 1,2-diol-modified vinyl alcohol-based resin (A)-containing layer and the thermoplastic resin (B)-containing layer. Normally, the stretching temperature is preferably in a range from a temperature lower than the melting point of the thermoplastic resin (B) to a temperature lower than the melting point of the thermoplastic resin (B) by about 40 °C. This is because, since the thermoplastic resin (B)-containing layer normally has a largest thickness in the multilayer structure, the stretching ratio of the multilayer structure is significantly dominated by the stretching property of the thermoplastic resin (B).
The melting point of the side chain 1,2-diol-modified vinyl alcohol-based resin (A)-containing layer, and the melting point of the thermoplastic resin (B)-containing layer are preferably used with such a combination that the melting point of the side chain 1,2-diol-modified vinyl alcohol-based resin (A) and the melting point of the thermoplastic resin (B) lie in a substantially same melting point range, depending on a thickness ratio between the respective layers. The stretching temperature is normally selected from a range of 40 to 250 °C, preferably 100 to 180 °C, and particularly preferably 120 to 165 °C, and specifically preferably 145 to 165 °C. In the case where the stretching temperature is exceedingly lower than the melting points of the respective layers constituting the multilayer film, stretching of the layers may become difficult, and in a worse case, the layers of the multilayer film may be ruptured.

In the case where a stretching process is performed in plural steps, a highest stretching temperature is employed to satisfy the above requirement, out of the stretching temperatures in the respective steps.

Stretching at a high stretching ratio can be performed, depending on the kind of the thermoplastic resin (B)-containing layer, because the side chain 1,2-diol-modified vinyl alcohol-based resin (A)-containing layer of the multilayer film used in the invention is easily stretched, as compared with a conventional vinyl alcohol-based resin without side chain 1,2-diol units. Specifically, the stretching ratio is 15 to 100 times, preferably 20 to 85 times, and particularly preferably 30 to 70 times in terms of area ratio. In the conventional method, there is a drawback that a stretched multilayer film may be undulated or ruptured if stretched at a stretching ratio of 15 times or more, thereby deteriorating the appearance of the obtained stretched multilayer film. However, according to the inventive method, a tension force or a load to be exerted in a stretching process can be uniformly distributed on the entirety of a multilayer film through the adhesive resin (C) layer, therefore, the side chain 1,2-diol-modified vinyl alcohol (A)-containing layer can be stretched along with the thermoplastic resin (B)-containing layer at a high stretching ratio.

Regarding the stretching process, typical stretching methods may be employed. Both of monoaxial stretching and biaxial stretching may be employed. Regarding the type of biaxial stretching, both of simultaneous biaxial stretching type and sequential biaxial stretching type may be employed. The technique of stretching is not particularly limited. Any known techniques including roll stretching, tenter stretching, tubular stretching and so on may be employed. Stretching may be conducted with use of chuck, plug, pressure force or the like.

In the inventive method of producing a stretched multilayer film, preferably, heat fixation is performed after a stretching process is performed. Heat fixation may be performed by well-known means e.g. by placing a stretched multilayer film still for e.g. 2 to 600 seconds at an atmospheric temperature at a position near the film, normally in the range of 80 to 135 °C, and preferably 100 to 120 °C, while retaining the film in a stretched state without flexure.

According to the production method of the invention, the adhesive resin (C) layer can still retain in film state without melting in a stretching process. The multilayer structure comprising side chain 1,2-diol-modified vinyl alcohol-based resin(A)-containin.g layer and thermoplastic resin (B)-containing layer is stretched under the condition of non-melting adhesive resin (C) layer, the obtained stretched multilayer film has an excellent appearance in which all layers constituting the multilayer film are uniformly stretched. The reason or mechanism is not made clear, but it is conceivably understood that the unmelt but softened adhesive resin (C) layer might disperse tension force exerted in the stretching process and uniformly distribute the tension force on the entirety of the film.

The thickness of the stretched multilayer film thus obtained falls in the range of usually 5 to 1000µm, preferably 15 to 500µm. The thickness of each layer of the stretched multilayer film depends on layer formation, use, packaging embodiment, properties required, and so on. The thickness of vinyl alcohol-based resin (A)-containing layer is selected from the range of usually 0.5 to 500µm, preferably 2.5 to 200µm. The thickness of the thermoplastic resin (B)-containing layer is selected from the range of usually 5 to 900µm, preferably 15 to 400µm. The thickness of the adhesive resin (C) layer is selected from the range of usually 0.5 to 500µm, preferably 0.5 to 100µm.
Typically, vinyl alcohol-based resin (A)-containing layer is thicker than adhesive resin (C) layer. The ratio of thickness of vinyl alcohol-based resin (A)-containing layer to adhesive resin (C) layer (i.e. vinyl alcohol-baaed resin (A)-containing layer / adhesive resin (C) layer) is in the range of usually 1 to 100, preferably 1 to 50, more preferably 1 to 10.
Also, in a stretched multilayer film, the total thickness of vinyl alcohol-based resin (A)-containing layers is larger than the total thickness of thermoplastic resin (B)-containing layers, and the ratio of their total thicknesses (i.e. thermoplastic resin (B)-containing layers / vinyl alcohol-based resin (A)-containing layers) is in the range of usually 1 to 100, preferably 3 to 20, more preferably 6 to 15.

The stretched multilayer film of the present invention is producible by the production method of the invention. After the stretching process is performed, the obtained stretched multilayer film may be laminated on other substrate. Examples of the substrate include paper, foil, mono- or biaxially stretched plastic film or sheet, and inorganic material deposited film or sheet, fabric, non-woven fabric, metal fiber felt, and wooden substrate. Such another substrate can be laminated by extruding-coating on the stretched multilayer film or laminating or the like with an adhesive resin.

A stretched multilayer film of the invention can exhibit excellent appearance and excellent gas barrier property by stretched at a high magnitude, and therefore is useful for packaging containers for foods, medicine, industrial reagents, pesticides.

### EXAMPLE

The present invention is more specifically described and explained by means of the following Examples. The present invention is not construed as being limited to the Examples, as long as it does not depart from the gist of the invention. In Examples, all "parts" is by weight unless otherwise noted.

### [Measurement and evaluation method]

First, a measurement and evaluation method used in the following Examples will be described.

### (1) Appearance of stretched multilayer film

The appearance of the obtained stretched multilayer films was evaluated by visual observation as follows.
ο: Stretching unevenness or thickness variation was not observed, and the appearance was satisfactory.
Δ: Stretching unevenness or thickness variation was observed, and the appearance was not satisfactory, but no rupture was observed in a stretching step.
×: The multilayer film was ruptured in a stretching step, and a stretched multilayer film was not obtained.

### (2) Adhesiveness between layers

The obtained stretched multilayer films were cut by a cutter, and the film sections were evaluated as follows.
○: Layer peeling was not observed, and the adhesiveness was good.
×: Layer peeling was observed, and the adhesiveness was poor.

### (3) Atmospheric temperature of multilayer structure

The atmospheric temperatures of the multilayer structures shown in the following examples are values obtained by measuring an atmospheric temperature of a middle portion of each multilayer film to be stretched at a position away from the multilayer film by 1 cm in vertical direction with use of a thermocouple type thermometer.

### [Preparation and evaluation of stretched multilayer films]

### Example 1:

An EVOH resin [ethylene content: 38 mol%, saponification degree: 99.8 mol%, content of side chain 1,2-diol units (1a) 0.7 mol%, MFR 4.0g/10 min (210 °C, 2160g)] was used as (A) side chain 1,2-diol-modified vinyl alcohol-based resin. "Novatec PP FL6CK" (polypropylene resin having a melting point of 160 °C) of Japan Polypropylene Corporation was used as (B) thermoplastic resin. A maleic acid-modified polypropylene resin (melting point: 161 °C) was used as (C) adhesive resin.
The (A) side chain 1,2-diol-modified vinyl alcohol-based resin, the (B) polypropylene resin, and the (C) adhesive resin were fed to a multilayer extruder equipped with a multilayer T die with a feed block of 3 species and 5 layers, and a multilayer film constituted of polypropylene resin layer/adhesive resin layer/EVOH resin layer/adhesive resin layer/polypropylene resin layer with a layer formation (thicknesses: 200/30/60/30/200 µm) was obtained by a coextruding process.

The multilayer film was preheated in an atmospheric temperature of 155 °C for 2 minutes, and was subjected to simultaneous biaxial stretching at a stretching speed of 200 mm/sec at the same temperature as above, with 7 times in machine direction and 7 times in transverse direction (stretching ratio: 49 times). After the stretching process was performed, the multilayer film was subjected to a heat treatment in an atmospheric temperature of 110 °C for 3 minutes, and a stretched multilayer film was obtained. The appearance and adhesiveness between layers were evaluated based on the above measurement and evaluation method. A result of the evaluation is shown in Table 1.

### Comparative Examples 1 and 2:

Stretched multilayer films were produced in the same manner as Example 1 except that maleic acid-modified polypropylene-based resins having melting points shown in Table 1 were used as (C) adhesive resin, and evaluated based on the above measurement and evaluation method. Their results are shown in Table 1.

**[Table 1]**

| | Side chain 1,2-diol content in vinyl alcohol-based resin(A) -containing layer | Melting point of thermoplastic resin(B) -containing layer | Melting point of adhesive resin(C) | Stretching temperature | Appearance | Adhesiveness between layers |
|---|---|---|---|---|---|---|
| Example 1 | 0.7 mol% | 160 °C | 161 °C | 155 °C | ○ | ○ |
| Comparative Example 1 | 0.7 mol% | 160 °C | 122 °C | 155 °C | × | ○ |
| Comparative Example 2 | 0.7 mol% | 160°C | 145 °C | 155 °C | Δ | ○ |

As shown in Table 1, while Example 1 using the adhesive resin whose melting point was higher than stretching temperature was excellent in appearance, both of Comparative Example 1 and 2 using the adhesive resins whose melting points were lower than the stretching temperature were not satisfied in appearance. Especially, Comparative Example 1 using the adhesive resin whose melting point was lower than stretching temperature by 33°C was inferior in appearance to Comparative Example 2 using the adhesive resin whose melting point was lower than stretching temperature by 10°C. It is conceivably understood that the adhesive resin in Comparative Example 1 became in a fluidized state and furthermore a viscosity of the fluid was lowered, as a result, the multilayer film was ruptured during a stretching process. Alternatively, it is understood that the adhesive resin layer became too softened to distribute tension force evenly.

### Example 2, and Comparative Examples 3 and 4:

Stretched multilayer films were produced in the same manner as Example 1 except that EVOH resin having ethylene content of 38mol%, saponification degree of 99.8 mol%, and the content of side chain 1,2-diol unit (1a) of 1.5 mol%, and MFR 4.0g/10 min (210°C, loading:2160g) was used as (A) side chain 1,2-diol-modified vinyl alcohol-based resin, and evaluated. Their results are shown in Table 2.

**[Table 2]**

| | Side chain 1,2-diol content in vinyl alcohol-based resin(A) -containing layer | Melting point of thermoplastic resin(B) -containing layer | Melting point of adhesive resin(C) | Stretching temperature | Appearance | Adhesiveness between layers |
|---|---|---|---|---|---|---|
| Example 2 | 1.5mol% | 160 °C | 161 °C | 155 °C | ○ | ○ |
| Comparative Example 3 | 1.5mol% | 160 °C | 122 °C | 155 °C | Δ | ○ |
| Comparative Example 4 | 1.5mol% | 160 °C | 145 °C | 155 °C | Δ | ○ |

The evaluation results of examples using EVOH resin having the side chain 1,2-diol unit (1a) content of 1.5 mmol% showed the same trend as ones using EVOH resin having side chain 1,2-diol unit content of 0.7 mol%. Accordingly, the stretched multilayer film of Example 2 using the adhesive resin whose melting point was higher than the stretching temperature had excellent appearance, while the stretched multilayer film of Comparative Examples 3 and 4 using the adhesive resins whose melting points were lower than the stretching temperature had undulating streaks in appearance.
Comparative Example 3 and Comparative Example 1 are common with the point that difference between stretching temperature and melting point of the adhesive resin is 33°C, however, Comparative Example 3 prevented the multilayer film from being torn during a stretching process. The effect is conceivably understood that the vinyl alcohol-based resin (A) with a higher content of side chain 1,2-diol could contribute to an excellent stretching property.

### Example 3:

The multilayer film was produced in the same manner as Example 2 except that "Novatec PP FX4G" (polypropylene-based resin having melting point of 125°C) manufactured by Japan Polypropylene Corporation was used as (B) thermoplastic resin, and the adhesive resin used in Comparative Example 1 (i.e. maleic acid-modified polypropylene-based resin having melting point of 122°C) was used as (C) adhesive resin.
The obtained multilayer film was preheated in an atmospheric temperature of 120°C for 2 minutes, and was subjected to simultaneous biaxial stretching at a stretching speed of 200mm/sec at the same temperature as above, with 7 times in machine direction and 7 times in transverse direction (stretching ratio : 49 times). After the stretching process was performed, the multilayer film was subjected to heat treatment in atmospheric temperature of 110°C for 3 minutes, and a stretched multilayer film was obtained. The appearance and adhesiveness between layers of the stretched multilayer film were evaluated, based on the above measurement and evaluation method. The result of the evaluation is shown in Table 3.

### Comparative Example 5

A stretched multilayer film was obtained in the same manner as Example 3 except that maleic acid-modified ethylene-vinyl acetate-based resin having melting point of 98°C was used as (C) adhesive resin, and the stretched multilayer film was evaluated, based on the above measurement and evaluation method. The result of the evaluation is shown in Table 3.

**[Table 3]**

| | Side chain 1,2-diol content in vinyl alcohol-based resin(A) -containing layer | Melting point of thermoplastic resin(B) -containing layer | Melting point of adhesive resin(C) | Stretching temperature | Appearance | Adhesiveness between layers |
|---|---|---|---|---|---|---|
| Example 3 | 1.5mol% | 125 °C | 122 °C | 120 °C | ○ | ○ |
| Comparative Example 5 | 1.5mol% | 125 °C | 98 °C | 120°C. | Δ | ○ |

In Comparative Example 5, where a resin having a melting point lower than the melting point of the (B) thermoplastic resin was used as the (C) adhesive resin, undulating streaks were observed on the stretched multilayer film, while the stretched multilayer film in Example 3 using the adhesive resin whose melting point was higher than the stretching temperature had an excellent appearance.
In Examples 2 and 3, the same vinyl alcohol-based resin (A)-containing layer was used, but the thermoplastic resin (B)-containing layers having different melting points were used. The stretching temperature was set at a temperature equal to or lower than the melting point of the thermoplastic resin (B)-containing layer, and a resin having a melting point higher than the stretching temperature was used as (C) adhesive resin. Since both of the multilayer films of Examples 2 and 3 have an excellent appearance, it is obvious that selection of an adhesive resin is more important than reduction of the difference between the melting point of the vinyl alcohol-based resin (A)-containing layer and the stretching temperature in producing a stretched multilayer film using the vinyl alcohol-based resin (A) and the thermoplastic resin (B).

### Examples 4 and 5, and Comparative Example 6

EVOH resin having ethylene content of 38 mol%, saponification degree of 99.8 mol%, the content of side chain 1,2-diol unit (1a) of 3.0 mol%, and MFR 4.0g/10 min (210°C, 2160g) as side chain 1,2-diol-modified vinyl alcohol-based resin (A) was blended with unmodified EVOH [ethylene content: 38 mol%, saponification degree: 99.6 mol%, content of the structural unit (1a): 0 mol%, MFR 4.0g/10 min (210°C, loading:2160g)] at the ratio of 50/50 to prepare an EVOH resin composition for vinyl alcohol-based resin (A)-containing layer. The content of side chain 1,2-diol units in the vinyl alcohol-based resin (A)-containing layer was 1.5 mol%.
"Novatec PP FX4E" manufactured by Japan Polypropylene Corporation (polypropylene-based resin having melting point of 131°C) was used as thermoplastic resin (B).
Maleic acid-modified polypropylene-based resins having melting points shown in Table 4 were used as adhesive resin (C) in Examples 4 and 5, and Comparative Example 6, respectively.

The resins (and resin composition) were supplied respectively to a multilayered film forming extruder system equipped with T dies of three-component-five-layered feed blocks, and multilayer films were produced by co-extruding method. Each of the obtained multilayer films has the layer formation of polypropylene-based resin layer/adhesive resin layer/EVOH composition layer/adhesive resin layer/polypropylene-based resin layer (thickness: 360/45/90/45/360 µm).

The obtained multilayer film was preheated in an atmospheric temperature of 130°C for 2 minutes, and subjected to simultaneous biaxial stretching at a stretching speed of 200 mm/sec at the same temperature as above, with 7 times in machine direction and 7 times in transverse direction (stretching ratio :49 times). After the stretching process was performed, the multilayer film, was subjected to a heat treatment in an atmospheric temperature of 110°C for 3 minutes, and a stretched multilayer film was obtained. The appearance and adhesiveness between layers were evaluated, based on the above measurement and evaluation method. Their results of the evaluation are shown in Table 4.

**[Table 4]**

| | Side chain 1,2-diol content in vinyl alcohol-based resin(A) -containing layer | Melting point of thermoplastic resin(B) -containing layer | Melting point of adhesive resin(C) | Stretching temperature | Appearance | Adhesiveness between layers |
|---|---|---|---|---|---|---|
| Example 4 | 1.5mol% | 131 °C | 161 °C | 130 °C | ○ | ○ |
| Example 5 | 1.5mol% | 131 °C | 140 °C | 130 °C | ○ | ○ |
| Comparative Example 6 | 1.5mol% | 131 °C | 122 °C | 130 °C | Δ | ○ |

Both stretched multilayer films of Examples 4 and 5 using the adhesive resins whose melting points were higher than the stretching temperature, were excellent in appearance. With respect to Comparative Example 6, the difference between the melting point of the adhesive resin and stretching temperature was 8°C, which was smaller than the difference of Example 4 (temperature difference= 31°C) and the difference of Example 5 (temperature difference=10°C) . Despite of smaller difference, the obtained stretched multilayer film of Comparative Example 6 had undulating streaks. These results show that a resin not fluidized during a stretching process is useful as an adhesive resin in order to obtain a stretched multilayer film by stretching at a high ratio.

### INDUSTRIAL APPLICABILITY

According to the inventive production method, a stretched multilayer film having improved thickness uniformity and an excellent appearance can be produced, even by stretching a multilayer structure at a high stretching ratio. The multilayer structure which comprises a layer containing side chain 1,2-diol-modified vinyl alcohol-based resin having an excellent gas barrier property, a layer laminated on the vinyl alcohol-based resin-containing layer and containing a thermoplastic resin (e.g. polypropylene) having a melting point of 125 °C or higher, and an adhesive resin layer intervened between the vinyl alcohol-based resin-containing layer and the thermoplastic resin layer. Therefore, the inventive production method is advantageous as a method for producing a packaging film for food, medicine, and the like, whose requirement for a film appearance and film properties such as gas barrier property and mechanical strength is high.

## Claims

1. A method for production of a stretched multilayer film comprising at least mono-axially stretching a multilayer structure under heating,
wherein the multilayer structure comprises
a layer containing (A) vinyl alcohol-based resin having 1,2-diol unit in a side chain thereof represented by formula (1);
a layer laminated on at least one side of the layer containing the (A) vinyl alcohol-based resin, and containing (B) thermoplastic resin having a melting point of 125 to 300°C; and
a layer of (C) adhesive resin intervened between the layer containing (A) vinyl alcohol-based resin and the layer containing (B) thermoplastic resin,
wherein the (C) adhesive resin has a melting point higher than the stretching temperature of the multilayer structure, 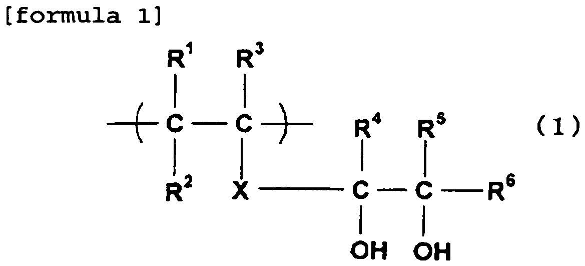 and wherein each of R¹ to R⁶ independently represents hydrogen atom or an organic group, and X represents a single bond or binding chain,
wherein the stretching ratio is in the range of 15 to 100 times in terms of area ratio.

2. A method for production of a stretched multilayer film according to claim 1, wherein
the layer laminated on at least one side of the layer containing the (A) vinyl alcohol-based resin, contains (B) polyolefin-based resin having a melting point of 145 to 200°C.

3. The method for production of a stretched multilayer film according to claim 1 or 2, wherein the content of the 1,2-diol unit in a side chain to the layer containing the (A) vinyl alcohol-based resin is in the range of 0.1 to 30 mol%.

4. The method for production of a stretched multilayer film according to any of the claims 1 to 3, wherein the 1,2-diol unit in a side chain is a structural unit represented by formula (1a).

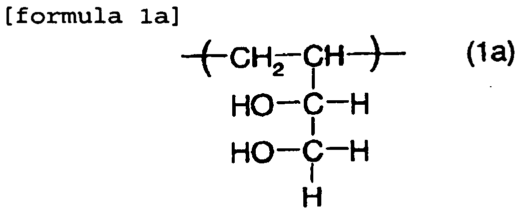

5. The method for production of a stretched multilayer film according to any one of claims 1 to 4, wherein the vinyl alcohol-based resin (A) is polyvinyl alcohol-based resin or a saponified product of ethylene-vinyl ester-based copolymer.

6. The method for production of a stretched multilayer film according to any one of claims 1 to 4, wherein the vinyl alcohol-based resin (A) is a saponified product of ethylene-vinyl acetate-based copolymer having ethylene structural unit of 20 to 60 mol%.

7. The method for production of a stretched multilayer film according to any one of claims 1 to 6, wherein the stretching process is performed at a stretching temperature of 40 to 250°C as a temperature of the multilayer structure, and the stretching temperature is lower than melting points both of the layer containing the (A) vinyl alcohol-based resin and the layer containing the (B) thermoplastic resin.

8. The method for production of a stretched multilayer film according to any one of claims 1 to 7, wherein the melting point of the (C) adhesive resin is higher than the stretching temperature by 1 to 40°C.

9. The method for production of a stretched multilayer film according to any one of claims 1 to 8, wherein the (C) adhesive resin is a carboxylic acid-modified polyolefin-based resin having a melting point higher than the stretching temperature of multilayer structure in a stretching process.

10. The method for production of a stretched multilayer film according to claim 9, wherein the carboxylic acid-modified polyolefin-based resin is carboxylic acid-modified polypropylene-based resin.

11. The method for production of a stretched multilayer film according to any one of claims 1 and 3-10, wherein the melting point of the (B) thermoplastic resin is in the range of 145 to 200°C.

12. The method for production of a stretched multilayer film according to claim 2, the polyolefin-based resin is polypropylene-based resin.

13. A stretched multilayer film produced by a method claimed in any one of claims 1 to 12.

## Patentansprüche

1. Verfahren zur Erzeugung einer verstreckten Vielschichtfolie, umfassend zumindest monoaxiales Strecken einer Vielschichtstruktur unter Erwärmen,
worin die Vielschichtstruktur umfasst:
eine Schicht, umfassend (A) ein Harz auf Vinylalkoholbasis mit 1,2-Diol-Einheit in einer Seitenkette davon, dargestellt durch die Formel (1);
eine Schicht, laminiert auf zumindest einer Seite der Schicht, umfassend (A) das Harz auf Vinylalkohol-Basis und umfassend (B) thermoplastisches Harz mit einem Schmelzpunkt von 125 bis 300°C; und
eine Schicht aus (C) Adhäsivharz, die zwischen der Schicht, umfassend (A) das Harz auf Vinylalkohol-Basis, und der Schicht, umfassend (B) das thermoplastische Harz, angeordnet ist,
worin das Adhäsivharz (C) einen Schmelzpunkt hat, der höher ist als die Strecktemperatur der Vielschichtstruktur, 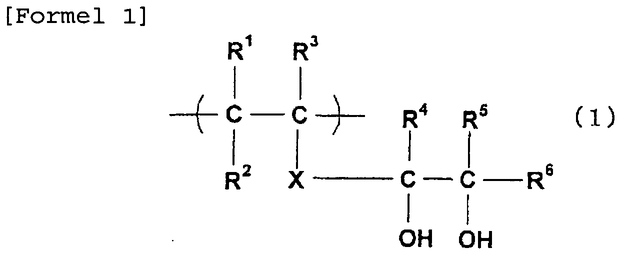
und worin jedes von R¹ bis R⁶ unabhängig Wasserstoffatom oder eine organische Gruppe sind und X eine Einfachbindung oder eine Bindekette ist,
worin das Streckverhältnis im Bereich des 15- bis 100-fachen, ausgedrückt als Flächenverhältnis ist.

2. Verfahren zur Erzeugung einer verstreckten Vielschichtfolie nach Anspruch 1, worin die Schicht, laminiert auf zumindest einer Seite der Schicht, umfassend das Harz auf Vinylalkohol-Basis (A), ein Harz auf Polyolefin-Basis (B) mit einem Schmelzpunkt von 145 bis 200°C umfasst.

3. Verfahren zur Erzeugung einer verstreckten Vielschichtfolie nach Anspruch 1 oder 2, worin der Gehalt der 1,2-Diol-Einheit in einer Seitenkette zu der Schicht, umfassend das Harz (A) auf Vinylalkohol-Basis im Bereich von 0,1 bis 30 mol% ist.

4. Verfahren zur Erzeugung einer verstreckten Vielschichtfolie nach einem der Ansprüche 1 bis 3, worin die 1,2-Diol Einheit in einer Seitenkette eine strukturelle Einheit ist, dargestellt durch die Formel (1a) :

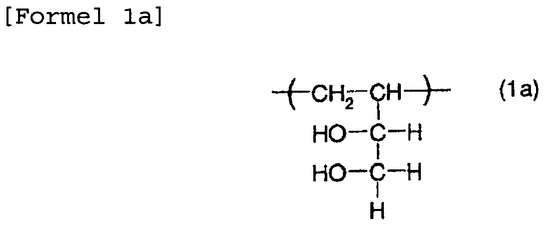

5. Verfahren zur Erzeugung einer verstreckten Vielschichtfolie nach einem der Ansprüche 1 bis 4, worin das Harz (A) auf Vinylalkohol-Basis ein Harz auf Polyvinylalkohol-Basis oder ein verseiftes Produkt aus einem Copolymer auf Ethylen-Vinylester-Basis ist.

6. Verfahren zur Erzeugung einer verstreckten Vielschichtfolie nach einem der Ansprüche 1 bis 4, worin das Harz (A) auf Vinylalkohol-Basis ein verseiftes Produkt aus Copolymer auf Ethylen-Vinylacetat-Basis mit einer strukturellen Ethylen-Einheit von 20 bis 60 mol% ist.

7. Verfahren zur Erzeugung einer verstreckten Vielschichtfolie nach einem der Ansprüche 1 bis 6, worin der Streckvorgang bei einer Strecktemperatur von 40 bis 250°C als eine Temperatur der Vielschichtstruktur durchgeführt wird und die Strecktemperatur niedriger ist als die Schmelzpunkte sowohl der Schicht, umfassend das Harz (A) auf Vinylalkohol-Basis, als auch der Schicht, umfassend das thermoplastische Harz (B).

8. Verfahren zur Erzeugung einer verstreckten Vielschichtfolie nach einem der Ansprüche 1 bis 7, worin der Schmelzpunkt des Adhäsivharzes (C) um 1 bis 40°C höher ist als die Strecktemperatur.

9. Verfahren zur Erzeugung einer verstreckten Vielschichtfolie nach einem der Ansprüche 1 bis 8, worin das Adhäsivharz (C) ein Harz auf Carbonsäure-modifizierter Polyolefin-Basis mit einem Schmelzpunkt ist, der höher ist als die Strecktemperatur der Vielschichtstruktur in einem Streckvorgang.

10. Verfahren zur Erzeugung einer verstreckten Vielschichtfolie nach Anspruch 9, worin das Harz auf Carbonsäure-modifizierter Polyolefin-Basis ein Harz auf Carbonsäure-modifizierter Polypropylen-Basis ist.

11. Verfahren zur Erzeugung einer verstreckten Vielschichtfolie nach einem der Ansprüche 1 und 3 bis 10, worin der Schmelzpunkt des thermoplastischen Harzes (B) im Bereich von 145 bis 200°C liegt.

12. Verfahren zur Erzeugung einer verstreckten Vielschichtfolie nach Anspruch 2, worin das Harz auf Polyolefin-Basis ein Harz auf Polypropylen-Basis ist.

13. Verstreckte Vielschichtfolie, erzeugt durch ein Verfahren nach einem der Ansprüche 1 bis 12.

## Revendications

1. Procédé de production d'un film multicouche étiré comprenant au moins l'étirement monoaxial d'une structure multicouche à chaud,
dans lequel la structure multicouche comprend
une couche contenant une résine à base d'alcool vinylique (A) ayant un motif 1,2 diol dans une chaîne latérale de celle-ci représentée par la formule (1) ;
une couche stratifiée sur au moins une face de la couche contenant la résine à base d'alcool vinylique (A), et contenant une résine thermoplastique (B) ayant un point de fusion de 125 à 300°C ; et
une couche de résine adhésive (C) intercalée entre la couche contenant la résine à base d'alcool vinylique (A) et la couche contenant la résine thermoplastique (B),
dans lequel la résine adhésive (C) a un point de fusion supérieur à la température d'étirement de la structure multicouche, 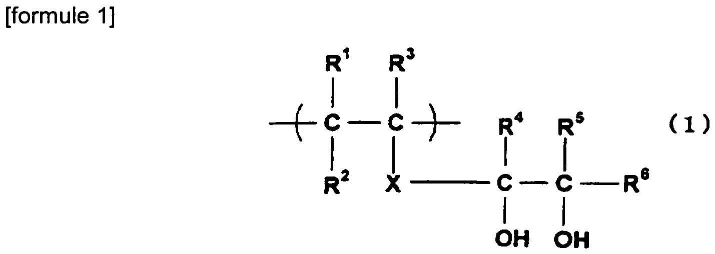 et dans laquelle chaque R¹ à R⁶ représente indépendamment un atome d'hydrogène ou un groupe organique, et X représente une liaison simple ou une chaîne de liaison,
dans lequel le rapport d'étirement se situe dans la plage de 15 à 100 en termes de rapport de surface.

2. Procédé de production d'un film multicouche étiré selon la revendication 1, dans lequel
la couche stratifiée sur au moins une face de la couche contenant la résine à base d'alcool vinylique (A) contient une résine à base de polyoléfine (B) ayant un point de fusion de 145 à 200°C.

3. Procédé de production d'un film multicouche étiré selon la revendication 1 ou 2, dans lequel la teneur en motif 1,2-diol dans une chaîne latérale pour la couche contenant la résine à base d'alcool vinylique (A) se situe dans la plage de 0,1 à 30 % en moles.

4. Procédé de production d'un film multicouche étiré selon l'une quelconque des revendications 1 à 3, dans lequel le motif 1,2-diol dans une chaîne latérale est un motif structural représenté par la formule (1a).

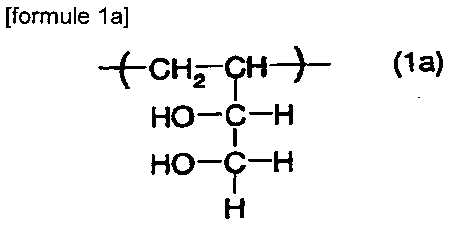

5. Procédé de production d'un film multicouche étiré selon l'une quelconque des revendications 1 à 4, dans lequel la résine à base d'alcool vinylique (A) est une résine à base d'alcool polyvinylique ou un produit saponifié d'un copolymère à base d'éthylène-ester vinylique.

6. Procédé de production d'un film multicouche étiré selon l'une quelconque des revendications 1 à 4, dans lequel la résine à base d'alcool vinylique (A) est un produit saponifié d'un copolymère à base d'éthylène-acétate de vinyle ayant un motif structural éthylène de 20 à 60 % en moles

7. Procédé de production d'un film multicouche étiré selon l'une quelconque des revendications 1 à 6, dans lequel le processus d'étirement est réalisé à une température d'étirement de 40 à 250°C en tant que température de la structure multicouche, et la température d'étirement est inférieure aux points de fusion de la couche contenant la résine à base d'alcool vinylique (A) et de la couche contenant la résine thermoplastique (B).

8. Procédé de production d'un film multicouche étiré selon l'une quelconque des revendications 1 à 7, dans lequel le point de fusion de la résine adhésive (C) est supérieur à la température d'étirement de 1 à 40°C.

9. Procédé de production d'un film multicouche étiré selon l'une quelconque des revendications 1 à 8, dans lequel la résine adhésive (C) est une résine à base de polyoléfine modifiée à l'acide carboxylique ayant un point de fusion supérieur à la température d'étirement de la structure multicouche dans un processus d'étirement.

10. Procédé de production d'un film multicouche étiré selon la revendication 9, dans lequel la résine à base de polyoléfine modifiée à l'acide carboxylique est une résine à base de polypropylène modifiée à l'acide carboxylique.

11. Procédé de production d'un film multicouche étiré selon l'une quelconque des revendications 1 et 3 à 10, dans lequel le point de fusion de la résine thermoplastique (B) se situe dans la plage de 145 à 200°C.

12. Procédé de production d'un film multicouche étiré selon la revendication 2, la résine à base de polyoléfine étant une résine à base de polypropylène.

13. Film multicouche étiré produit par un procédé revendiqué dans l'une quelconque des revendications 1 à 12.
